# EUROPEAN PATENT APPLICATION

(11) **EP 1 566 870 A2**
(43) Date of publication of application: **24.08.2005**
(21) Application number: 05250940.3
(22) Date of filing: 18.02.2005
(51) Int. Cl.: H02G 1/06

(54) **Cable laying apparatus**

(30) Priority: 20.02.2004 GB 0403867
(71) Applicant: Sean Hennelly, Middlesex UB1 3AD (GB)
(72) Inventor: Sean Hennelly, Middlesex UB1 3AD (GB)
(74) Representative: Bankes, Stephen Charles Digby

(57) **Abstract**

A cable puller for cable-laying apparatus comprises a housing with a plurality of passages through it for cables (18) being laid. Cables passing through the device run closely adjacent driven rollers (62, 72) and can be individually urged against the driven rollers to idler rollers (65, 75) mounted on pivoting arms (66, 76), to cause the cables to be pulled through the device by the driven rollers. Screw devices (44, 46) are provided for urging individual idler rollers into contact with a cable to be drawn through the device.

## Description

This invention relates to apparatus for laying cables, such as power and telephone lines, particularly along roads and railway tracks. In particular, the invention relates to a cable puller for drawing cables from drums mounted on road or railway vehicles for laying in trenches running alongside a road or railway track.

When a railway line is laid or renovated, a part of the operation often involves laying power, telecommunication or service cables in a trench running parallel to the track. Such cables generally arrive wound onto large drums mounted on a vehicle, the drums being mounted for rotation about a horizontal axis to enable cables to be pulled off them and laid as the vehicle moves forward.

The laying of cables in this way needs to be co-ordinated with the forward progress of the drum-carrying vehicle, and progress is often slow.

The present invention aims to speed up the cable laying process, particularly in the case of a rail-mounted cable laying apparatus, by providing a powered cable puller which can be used to draw a plurality of cables selectively from their respective drums as may be required.

The present invention provides a cable puller for cable-laying apparatus, said cable puller having a plurality of passages therethrough for individual cables and a continuous cable drive for drawing cables through said passages, means being provided for selectively engaging individual cables with the cable drive and for disengaging said cables.

The cable puller of the invention can be arranged to draw a number of cables from their respective drums and feed them onto a pivotable cable-laying mast carried on a cable-laying vehicle, from which the cables can be laid.

The means for drawing the cables through the cable puller may suitably comprise a roller or set of rollers arranged to be continuously driven in rotation, each cable passing through the device being arranged to run closely adjacent the rotating surface of such a roller, in a direction transverse to the axis of rotation of the roller, means being provided for pressing the cable against the driven roller surface in order to draw it through the device.

The means for pressing the cable against the driven roller surface may suitably comprise another roller, which is mounted for free rotation, preferably about an axis parallel to the axis of rotation of the driven roller. This freely rotating roller is preferably normally biased in a direction away from the cable, but can be pressed into contact with it, suitably by means of a screw device, so that the cable is gripped between the respective surfaces of the driven roller and the free roller.

A preferred embodiment of the invention will now be described with reference to the accompanying drawings, wherein:
FIG. 1 is a top plan view of a cable-laying railway vehicle incorporating a cable puller in accordance with the invention;
FIG. 2 is a side elevation of the cable-laying vehicle of Fig. 1;
FIG. 3 is a partial side elevation showing a cable puller mounted on a cable-laying arm of the vehicle;
FIG. 4 is an enlarged side elevation of the mounting of the cable puller as shown in Fig. 3;
FIG. 5 is an end view of the cable puller of Fig. 4, in the direction of arrow 5;
FIG. 6 is a cross-sectional view of the cable puller on the line VI-VI in Fig. 5;
FIG. 7 is a cross-sectional view on the line VII-VII of Fig. 6; and
FIG. 8 is a cross-sectional view on the line VIII-VIII of Fig. 7.

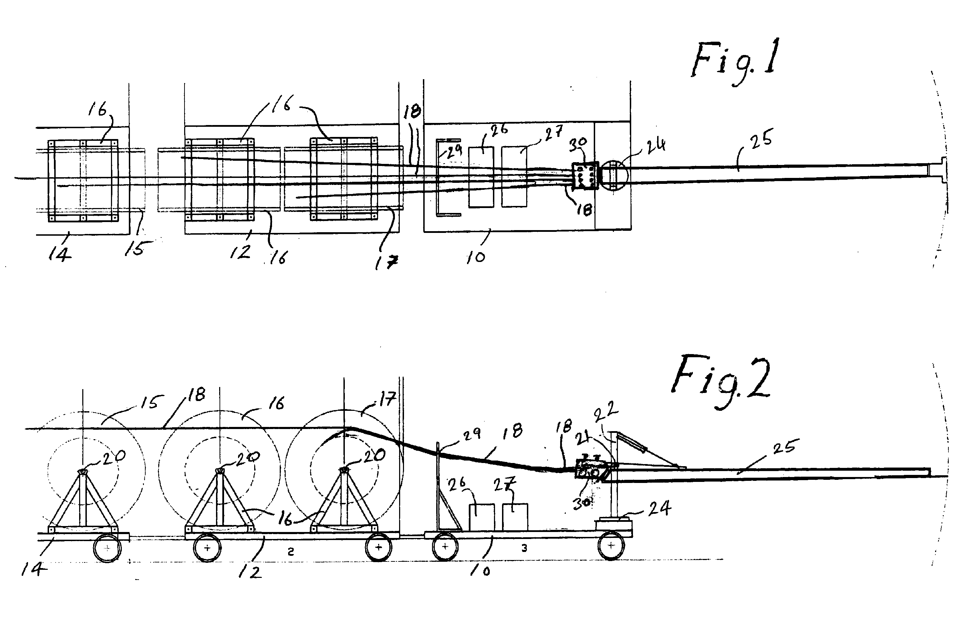

Referring first to Figs. 1 and 2, the cable-laying apparatus comprises three railway trucks schematically shown as 10, 12 and 14. Trucks 12 and 14 each carry a pair of cable drum stands 16, of which only one is shown on truck 14. These stands carry cable drums 15, 16 and 17, each mounted for rotation about an axis 20.

The truck 10 carries, at its forward end remote from the cable trucks, a vertical mast 22 which is mounted on a turntable 24 for rotation about a vertical axis. Pivotally attached to this mast at 21 is a cable-laying arm 25, extending away from the cable-laying trucks, along which cables can be run to lay them. The arm 25 may suitably have four parallel channels extending along its length, to keep four cables separate from one another as they run along the arm.

At the in-board end of the arm 25, a cable puller 30 in accordance with the invention is mounted so as to draw cables 18 from the drums and feed them to the cable-laying arm 25. In passing from the drums to the cable puller, the cables 18 pass over rollers 29 mounted on a stand on the truck 10.

The truck 10 also carries a generator 26 and power pack 27.

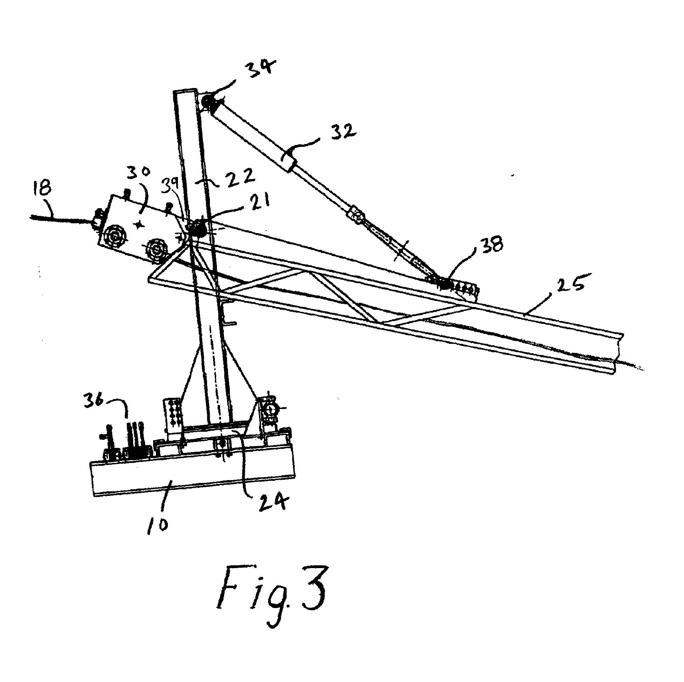

The mounting of the cable-laying arm is shown in more detail in Fig. 3. As can be seen from this figure, the arm 25 is mounted on a pivoting bearing 21 and can be raised and lowered by a hydraulic jack 32 pivotally mounted to the top of the mast 22 at 34, and connected to a position 38 part way along the top of the arm.

Rotation of the mast 22 on its turntable 24, as well as the operation of the jack 32 to raise and lower the arm, can be operated by controls generally indicated by 36.

The cable puller 30 is connected to the pivoting axis 21 by a pair of brackets 39, so that the cable puller hangs at the rear end of the arm and can pivot with it so that cables 18 passing through the cable puller can run uninterrupted along the arm as it is raised and lowered.

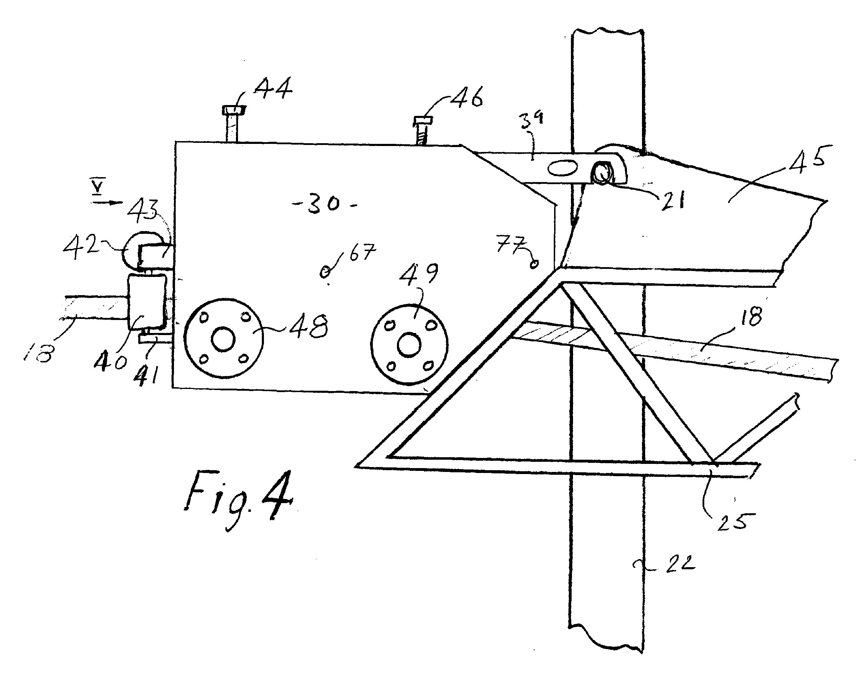

The cable puller 30 is shown in more detail in Fig. 4. This shows how the puller is pivotally supported on the pivot 21 by brackets 39. Also mounted on pivot 21 is a flange 45 extending upwardly from the arm 25.

The cable puller 30 comprises a steel housing with four passages through it through which cables 18 can pass as they are drawn off their respective cable drums, emerging from the housing to pass along the arm 25. On the side of the housing are mounted bearings 48 and 49 for rotary shafts extending through the housing, the function of which will be described below.

In the top of the housing are screw adjusters 44 and 46, the functioning of which will also be described in detail below.

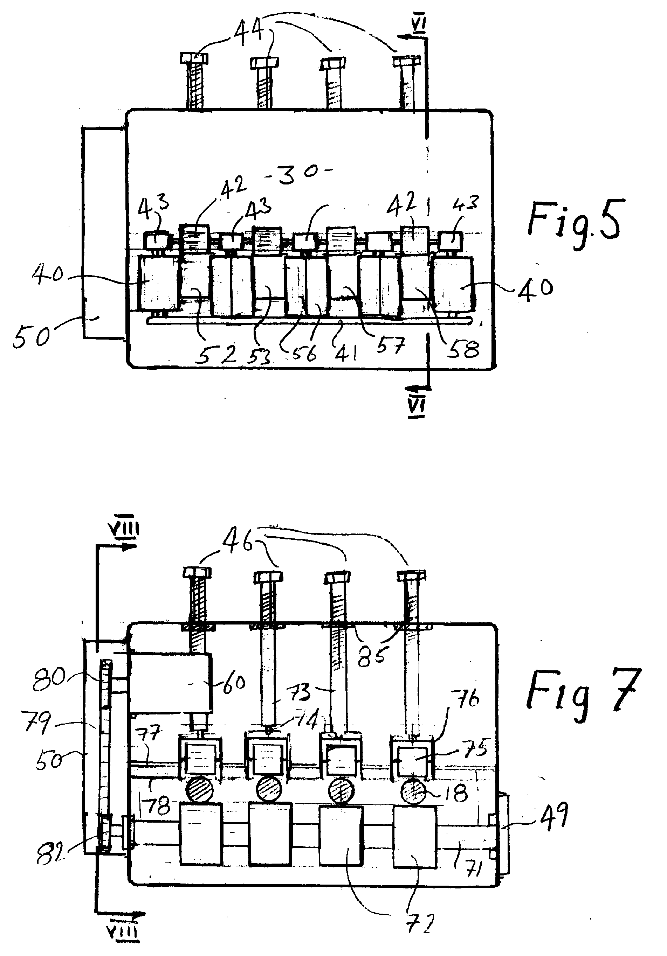

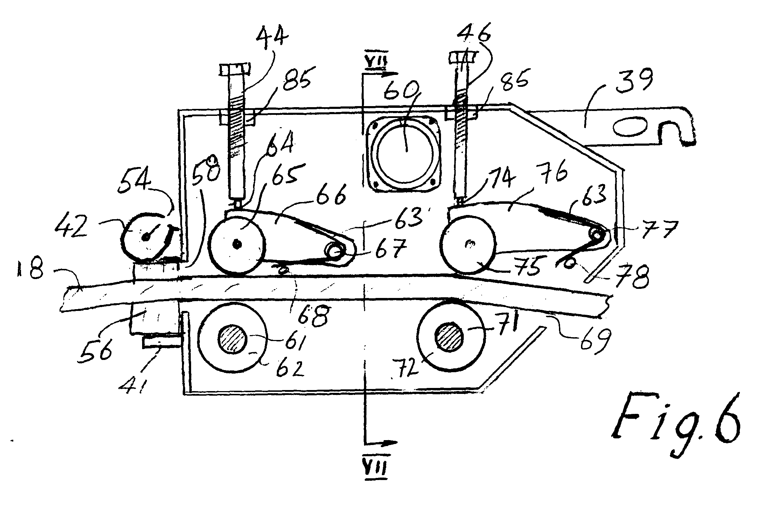

Referring now to Fig. 5, four apertures 52, 53, 57, 58 are provided in the end of the housing which faces the cable drums, each aperture being designed to take one cable. Between each pair of apertures 52, 53, 57, 58, are pairs of guide surfaces 56, each pair of guide surfaces facing one another on opposite sides of an aperture tapering inwardly towards each other and towards the aperture. The surfaces of the guides comprise a low-friction material such as polytetrafluoroethylene (PTFE of Teflon ®). At opposite ends of the row of apertures 52 are two vertical guide rollers 40 which are mounted for free rotation between lower and upper bearing blocks 41 and 43. The upper bearing blocks 43 also carry horizontal rollers 42, also mounted for free rotation on spindles 54. The bearing block 42 in which the lower ends of the vertical rollers 40 are mounted is in the form of a continuous strip welded to the puller housing. Each of the outermost apertures 52, 58 thus has a vertical guide roller 40 positioned on one side of it and a low-friction guide surface 56 on the opposite side. The two central apertures 53, 57 are located between pairs of guide surfaces 56 which converge towards them. Each of the guide rollers is positioned between respective bearing blocks 43, which also support respective upper ends of the vertical rollers, the horizontal rollers also being mounted for free rotation. The purpose of the guide rollers 40 and 42 and low-friction guide surfaces 56 is to enable the cables to enter the apertures at the correct angle, without rubbing against the edges of the apertures.

As is also apparent from Fig. 5, there are four of the screw adjusters 44, at spaced positions across the width of the cable puller, aligned with the apertures 52, 53, 57, 58.

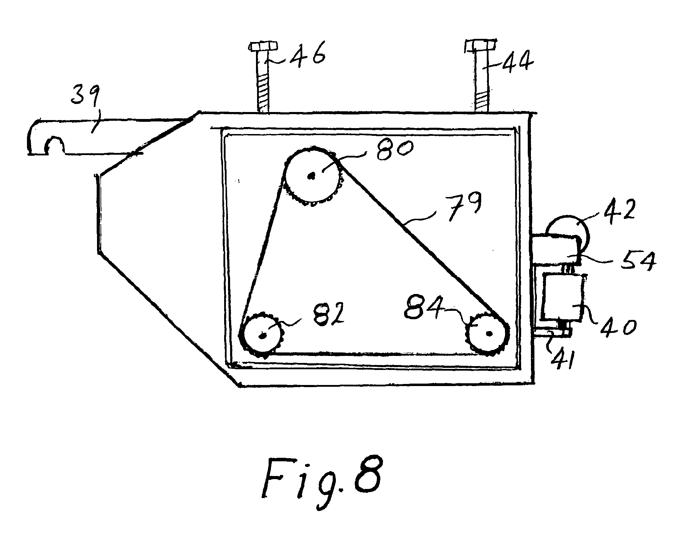

On one side of the cable puller is a chain drive housing 50, housing a chain drive which will be described in detail in relation to Fig. 8.

Fig. 6 illustrates the path of a cable 18 through the cable puller, from an entry aperture 58 to an exit aperture 69. In passing through the cable puller, the cable passes successively over first and second driven rollers 62, 72, mounted on respective driven shafts 61, 71. During operation of the cable puller, these two shafts are continually driven in rotation by a hydraulic motor 60, mounted within the puller housing, via a chain drive which will be described in detail below.

The driven rollers 62, 72 have cylindrical surfaces which can make frictional contact with the outer sheath of the cable, but such friction is only sufficient to draw the cable through the housing when the cable is pressed into firm contact with the surfaces of the driven roller by pressure rollers 65, 75. These rollers are mounted for free rotation on roller arms 66, 76, which are pivotally mounted on shafts 67, 77 which extend across the width of the cable puller housing, perpendicular to the direction of the cable. Torsion springs 63, wound around shafts 67, 77 with one end bearing against the inside of a lever arm and the other end bearing against a fixed transverse rod 68, 78, normally bias the two roller arms in a clockwise direction as seen in Fig. 6, so as to move the rollers 65, 75 away from the surface of the cable. One or both pressure rollers 65, 75 can however be pressed downwards by the respective screw adjusters 44, 46, which comprise threaded shafts passing through corresponding internally threaded blocks 85 mounted in the upper wall of the cable puller, and can be screwed down so that their respective ends 64, 74 bear against the roller arms 66, 76 to urge the pressure rollers 65, 75 against the cable and press it against the driven rollers 62, 72 which are continually rotating in a clockwise direction as seen in Fig. 6. The cable is thus engaged and pulled through the nips between the respective pairs of rollers, rotating about parallel axes, whereby the cable passes through the cable puller and into the cable arm.

The screw adjusters 44, 46, spaced across the width of the cable puller, can be adjusted individually so that any one or more of four cables passing through the four respective apertures 52 can be engaged with or disengaged from the driven rollers 62, 72 as may be required.

Referring now to Fig. 7, engagement of four cables 18 between respective aligned pairs of drive rollers 72 and driven rollers 75 is illustrated. This figure also shows how the shaft 71, on which driven rollers 72 are mounted, is connected to the hydraulic motor 60 by a drive chain 79 turned by a cog 80 within the chain drive housing, which cog is directly driven by the hydraulic motor 60.

The chain drive is illustrated in Fig. 8, which shows the drive chain 79 passing around the drive cog 80 and around cogs 82, 84 which in turn are arranged to turn shafts 71, 61.

During a cable laying operation, one or more of the cables 18 passing through the cable puller is selected, and the respective screw adjusters 44, 46 associated with the respective pair of rollers through which the selected cable passes are screwed down firmly so that the pressure rollers 65, 75 press the cable against the driven roller 62, 72. Operation of the hydraulic motor 60 then turns the shafts 61, 71, and rotation of the respective pressure rollers draws the selected cable through the cable puller and into its respective channel in the cable laying arm 25. Rotation of the mast 22 on its base 24, together with operation of the hydraulic jack 32 to raise or lower the arm 25, directs the cable to the trench in which it is to be laid, and the cable can then be laid by driving the whole cable laying vehicle in a direction to trail the cable behind it. The drum on which the selected cable is mounted may be driven in rotation so as to unwind the cable and assist its laying, and the speed of motion of the trucks 10, 12, 40 can be co-ordinated with the speed at which the cable is drawn through the cable puller 30 so that a continuous operation is effected with the trucks moving at the cable laying speed and unwinding the cable into the trench behind them.

It has been found that using the system of the invention, the speed of cable laying can be greatly enhanced and the required number of personnel reduced.

## Claims

1. A cable puller (30) for cable-laying apparatus, the puller having a plurality of passages therethrough for individual cables (18) and a continuous cable drive for drawing cables through said passages, means (44, 65, 66) being provided for selectively engaging individual cables with the cable drive and for disengaging said cables.

2. A cable puller according to claim 1 wherein the means for drawing the cables (18) through the cable puller (30) comprises a roller or set of rollers (62, 72) arranged to be continuously driven in rotation, the passage for each cable being positioned so that a cable passing through it runs adjacent the rotating surface of one said roller, in a direction transverse to the axis of rotation of the roller, means (44, 65, 66) being provided for pressing the cable against the driven roller surface in order to draw the cable through the device.

3. A cable puller according to claim 2 wherein the means for pressing each said cable against the adjacent driven roller surface (62, 72) comprises another roller (65,75) which is mounted for free rotation.

4. A cable puller according to claim 3 wherein said freely rotating roller (65, 75) has an axis of rotation parallel to the axis of rotation of the driven roller.

5. A cable puller according to claim 3 or claim 4 wherein the freely rotating roller (65, 75) is normally biased in a direction away from the continuously driven roller (62, 72) but can be pressed into contact with it.

6. A cable puller according to claim 5 wherein a screw device (44, 46) is associated with each said freely rotating roller (65, 75) for urging the freely rotating roller into engagement with a cable (18) to press it into contact with the driven roller (62, 72).

7. A cable puller according to any one of claims 3 to 6 wherein each said freely rotating roller (65, 75) is mounted on a pivoting arm (66, 76).

8. A cable puller according to any one of claims 2 to 7 wherein said cable passages run past two said driven rollers or sets of driven rollers (62, 72), means being associated with each said driven roller or set of driven rollers for urging a cable (18) into contact with it.

9. A cable puller according to any preceding claim wherein each said cable passage has guide rollers (40, 43) and/or guide surfaces (56) positioned to guide the cables into their respective passages.

10. A cable puller according to any preceding claim mounted on a cable-laying arm (25) on a cable-laying vehicle (10).

11. A cable-laying vehicle (10) comprising a cable-laying arm (25), means (16) for supplying a plurality of cables to the cable-laying arm and a cable puller (30) according to claim 9 arranged to draw cables from said cable supply means and past them along the cable-laying arm.

12. A cable-laying vehicle (10) according to claim 11 which is a rail-mounted vehicle.
